# EUROPÄISCHE PATENTSCHRIFT

(11) **EP 2 494 631 B1**
(45) Veröffentlichungstag und Bekanntmachung des Hinweises auf die Patenterteilung: **04.09.2013**
(21) Anmeldenummer: 10771441.2
(22) Anmeldetag: 28.10.2010
(51) Int. Cl.: H01M 2/12, H01M 2/02, H01M 2/10, H01M 10/02, H01M 10/04, H01M 10/50

(54) **BATTERIEZELLENANORDNUNG**
BATTERY CELL SYSTEM
AGENCEMENT D'ÉLÉMENT DE BATTERIE

(30) Priorität: 28.10.2009 US 255640 P
(43) Veröffentlichungstag der Anmeldung: 05.09.2012
(73) Patentinhaber: MAGNA STEYR Battery Systems GmbH & Co OG, 8141 Zettling (AT)
(72) Erfinder: THANNER, Herbert, A-8051 Graz (AT); WÜNSCHE, Ralph, A-8010 Graz (AT); ROEPKE,Stefan, A-8041Graz (AT); DÄMON ,Peter, 8301 Lassnitzhöne (AT)
(74) Vertreter: Rausch, Gabriele
(86) Internationale Anmeldenummer: PCT/EP2010/066350
(87) Internationale Veröffentlichungsnummer: WO 2011/051386

(56) Entgegenhaltungen:
- DE-C1- 19 519 883
- JP-A- 2007 087 922
- JP-A- 2008 204 816
- US-A1- 2009 017 365

## Beschreibung

Die vorliegende Erfindung betrifft eine Batteriezellenanordnung mit einer als Folienzelle ausgebildeten Batteriezelle.

Derartige Folienzellen weisen kein festes Gehäuse auf, sondern die zur Speicherung elektrischer Energie erforderlichen Komponenten der Batteriezelle sind von einer robusten Folie umgeben, die an den Schmalseiten des Zellenkörpers einen falzartigen Zellenrand bildet. Durch den Verzicht auf ein festes Gehäuse weist die Batteriezelle eine gewisse Flexibilität auf, was die Ausnutzung eines oftmals beengten Bauraums erleichtert. Außerdem sind derartige Folienzellen - auch Pouch-Zellen genannt - zuverlässig und vergleichsweise kostengünstig. Allerdings muss die Batteriezelle von einer sie stabilisierenden Einrichtung fixiert werden.

Aus der JP 2007 087922 A sind als Folienzellen ausgebildete Batteriezellen bekannt. Diese Batteriezellen weisen an einem Randbereich ein Ventil auf, das bei Überdruck im Inneren einer Batteriezelle zumindest teilweise öffnet. Die Batteriezellen werden von einem Rahmen umgeben.

In vielen Anwendungsbereichen wird eine Mehrzahl von Batteriezellenanordnungen der eingangs genannten Art zusammengefasst, um einen Energiespeicher zu bilden. Beispielsweise finden derartige Energiespeicher in Hybrid- oder Elektrofahrzeugen Anwendung. Zur Platzersparnis werden die Batteriezellenanordnungen möglichst eng gepackt angeordnet, beispielsweise gestapelt. Die räumlich enge Anordnung der Batteriezellenanordnungen stellt hohe Anforderungen an die die Batteriezellen tragenden Komponenten, insbesondere im Hinblick auf eine kompakte und gleichzeitig zuverlässige Fixierung der Batteriezellen. Auch muss gewährleistet sein, dass beispielsweise bei einer Schädigung der Batteriezelle benachbart angeordnete Batteriezellenanordnungen oder andere Komponenten nicht oder nur möglichst wenig geschädigt werden.

Es ist daher eine Aufgabe der vorliegenden Erfindung, eine Batteriezellenanordnung der eingangs genannten Art zu schaffen, die kompakt ist und die eine zuverlässige Fixierung der Batteriezelle ermöglicht. Gleichzeitig soll die Batteriezellenanordnung auch hohen Sicherheitsanforderungen gerecht werden und kostengünstig herstellbar sein.

Erfindungsgemäß weist die Batteriezelle einen flachen Zellenkörper mit zwei Stirnseiten, einen den Zellenkörper umrandenden flexiblen Zellenrand und zwei an einer Randseite der Batteriezelle angeordnete Kontaktabschnitte auf. Ferner ist eine ein erstes Rahmenelement und ein zweites Rahmenelement umfassende Rahmenanordnung vorgesehen, die den Zellenkörper randseitig allseitig einrahmen. An einer einer der Stirnseiten des Zellenkörpers abgewandten Seite der Rahmenanordnung ist zumindest eine Entlüftungsöffnung vorgesehen, um in einem Schadensfall den Austritt von Fluid, insbesondere Gas aus der Batteriezellenanordnung zu ermöglichen. Die Entlüftungsöffnung ist einer Seite der Batteriezelle zugeordnet, die der die Kontaktabschnitte aufweisenden Randseite der Batteriezelle gegenüber liegt.

Mit anderen Worten umfassen die Rahmenelemente den Zellenkörper zwar seitlich und lassen dabei dessen Stirnseiten frei, ein beispielsweise aus dem Zellenkörper austretendes Fluid kann in der Regel jedoch nicht durch die die Stirnseiten freilassenden Öffnungen der Rahmenelemente austreten, da diese in einer Batterie durch benachbart angeordnete Batteriezellenanordnungen gleicher oder ähnlicher Bauweise abgedeckt sind. Bei herkömmlichen Batterien mit bekannten Batteriezellenanordnungen führt eine Leckage der Batteriezelle dazu, dass sich in der Batteriezellenanordnung Fluid, zumeist eine aggressive Flüssigkeit und/oder ein aggressives Gas, ansammelt. Das Fluid kann beispielsweise durch seinen Druck und/oder seine chemische Reaktionsfähigkeit erheblichen Schaden an den Komponenten der Batteriezellenanordnung verursachen.

Um dies zu verhindern, weist die Rahmenanordnung zusätzlich zu den die Stirnseiten des Zellenkörpers freilassenden, großflächigen Öffnungen der Rahmenelemente zumindest eine zusätzliche Öffnung - die vorstehend bereits genannte Entlüftungsöffnung - auf, durch die das Fluid entweichen kann. Eine derartige Öffnung lässt sich auf einfache Weise vorsehen, ohne dass dadurch die Stabilität der Batteriezellenanordnung beeinträchtigt wird.

Dadurch, dass die Entlüftungsöffnung einer Seite der Batteriezelle zugeordnet ist, die der die Kontaktabschnitte aufweisenden Randseite der Batteriezelle gegenüber liegt, werden die Kontaktabschnitte, die eine elektrische Kontaktierung der Batteriezelle ermöglichen und die in der Regel zusammen mit dem mit Ihnen verbundenen elektrischen System vergleichsweise empfindlich gegenüber den genannten Fluiden sind, zuverlässig geschützt. Auch das Auftreten von durch das Fluid direkt oder indirekt hervorgerufene Kurzschlüsse kann so weitgehend vermieden werden.

Um den Austritt von im Innenbereich der Batteriezellenanordnung auftretenden Flüssigkeiten möglichst effizient zu gestalten, kann die Entlüftungsöffnung in Einbaulage der Batteriezellenanordnung unten angeordnet sein.

Gemäß einer Ausführungsform der Batteriezellenanordnung ist die Entlüftungsöffnung durch eine Ausnehmung an dem ersten Rahmenelement und/oder eine Ausnehmung an dem zweiten Rahmenelement gebildet. Insbesondere sind an dem ersten Rahmenelement und an dem zweiten Rahmenelement komplementär ausgebildete Ausnehmungen angeordnet, die zusammen die Entlüftungsöffnung bilden.

Die bei Aufladungs- und/oder Entladungsprozessen der Batteriezelle auftretende Abwärme kann auf effiziente Weise abgeführt werden, wenn die Rahmenanordnung zumindest teilweise wenigstens einen Kühlkanal bildet, der sich entlang einer der den Kontaktabschnitten zugeordneten Seite der Rahmenanordnung erstreckt. In diesem Bereich kann die bei Betrieb anfallende Wärme besonders effizient abgeführt werden. Die den Abgriff der gespeicherten elektrischen Energie ermöglichenden Kontaktabschnitte werden zudem direkt gekühlt. Der Kühlkanal muss nicht vollständig an der Rahmenanordnung ausgebildet sein, sondern kann zusammen mit anderen Komponenten eine Kühleinrichtung bereitstellen, die die Zufuhr des Kühlmittels, beispielsweise Wasser, ermöglicht.

Es kann vorgesehen sein, dass sich der Kühlkanal lediglich entlang der den Kontaktabschnitten zugeordneten Seite der Rahmenanordnung erstreckt, um den Aufbau der Batteriezellenanordnung möglichst einfach zu halten. In vielen Fällen ist es ausreichend, wenn die anderen Seiten der Rahmenanordnung kühlkanalfrei ausgebildet sind, solange die die elektrische Anbindung der Batteriezelle ermöglichenden Kontaktabschnitte und die ihnen zugeordnete Seite des Zellenrands gekühlt wird.

Insbesondere verläuft der Kühlkanal seitlich benachbart zu den Kontaktabschnitten der Batteriezelle, insbesondere in einer Ebene, die parallel versetzt zu einer durch die Kontaktabschnitte definierten Ebene angeordnet ist. So werden die Kontaktabschnitte effizient mitgekühlt. Die genannte Ebene kann beispielsweise eine Trennebene zwischen zwei in einer Batterie benachbart angeordneten Batteriezellenanordnungen sein.

Eine konstruktiv einfache Ausgestaltung eines zur Kühlung der Batteriezellenanordnung vorgesehenen Kühlsystems ergibt sich, wenn eine Eintrittsöffnung und eine Austrittsöffnung des Kühlkanals an gegenüberliegenden Seiten der Rahmenanordnung angeordnet sind.

Zur Minimierung des durch den Kühlkanal erzeugten Strömungswiderstandes kann dieser einen geradlinigen Verlauf aufweisen.

Gemäß einer Ausführungsform bildet das erste Rahmenelement der Rahmenanordnung einen ersten Kühlkanal zur Hälfte und das zweite Rahmenelement der Rahmenanordnung bildet einen zweiten Kühlkanal zur Hälfte, wobei das eine der beiden Rahmenelemente mit dem anderen der beiden Rahmenelemente einer identisch aufgebauten Rahmenanordnung einen vollständigen ersten oder zweiten Kühlkanal bildet. Insbesondere sind die jeweiligen Kühlkanalhälften durch eine rinnenförmige Ausnehmung gebildet. Hierdurch kann eine beliebige Anzahl von Rahmenanordnungen nebeneinander oder übereinander gestapelt werden, wobei zwei benachbarte Rahmenanordnungen gemeinsam einen jeweiligen Kühlkanal bilden.

In den jeweiligen Kühlkanal kann ein rohrförmiges Bauteil eingesetzt sein. Insbesondere ist das rohrförmige Bauteil ein separates Bauteil. Eine komplementäre Ausbildung des Kühlkanals und des Bauteils ermöglicht einen verbesserten Wärmeübergang und damit eine verbesserte Abfuhr der bei Betrieb der Batteriezelle entstehenden Abwärme.

Der Kühlkanal kann an einem Halteabschnitt angeordnet sein, der sich von einem der Rahmenelemente in eine Richtung erstreckt, die insbesondere parallel zu den durch die Stirnseiten gebildeten Ebenen ist, um den Kühlkanal in geeigneter Weise möglichst nah an den Kontaktabschnitten vorbei führen zu können und gleichzeitig eine konstruktiv einfache Anbindung des Kühlkanals an ein entsprechendes Kühlsystem zu ermöglichen.

Zur Verbesserung der Kühlung der Batteriezelle insbesondere im Bereich der Stirnseiten kann eine Kühlplatte vorgesehen sein, die in thermisch leitender Verbindung, insbesondere in direktem Kontakt mit dem Kühlkanal steht und die eine der Stirnseiten des Zellenkörpers zumindest abschnittsweise flächig bedeckt.

Um Dickenvariationen der Batteriezelle ausgleichen zu können, die beispielsweise bei einer so genannten "Zellatmung" beim Aufladen und Entladen der Batteriezelle auftreten, kann wenigstens eine der Stirnseiten des Zellenkörpers zumindest abschnittsweise flächig mit einer Elastomerschicht bedeckt sein. Diese schützt zudem die Stirnseite vor Beschädigungen.

Insbesondere weist wenigstens eines der Rahmenelemente eine Vertiefung zur Aufnahme der Kühlplatte und/oder der Elastomerschicht auf, wobei die Vertiefung insbesondere an einer dem Zellenkörper abgewandten Seite des Rahmenelements angeordnet ist, um die Batteriezellenanordnung möglichst kompakt zu gestalten.

Es kann vorgesehen sein, dass die Rahmenanordnung eine Klemmvorrichtung umfasst, mittels derer der Zellenrand zur Fixierung der Batteriezelle reibschlüssig zwischen den Rahmenelementen einklemmbar ist.

Gemäß einer weiteren Ausführungsform weist die Klemmvorrichtung eine an einem der Rahmenelemente ausgebildete Nut und einen an dem anderen Rahmenelement ausgebildeten, komplementär ausgeformten Vorsprung auf, um eine Nut-Feder-Verbindung zu schaffen, durch die der Zellenrand zumindest teilweise eingeklemmt ist. Dadurch wird die vorstehend bereits erwähnte reibschlüssige Fixierung der Batteriezelle verbessert. Die Klemmvorrichtung kann sich (bezogen auf eine vertikale Einbaulage der Batteriezellenanordnung) an zwei einander gegenüberstehenden Abschnitten der Rahmenanordnung entlang der gesamten Höhe des Zellenkörpers erstrecken, um so eine Fixierung der Batteriezelle über einen möglichst großen Bereich sicherzustellen. Auch bei einer bei Betrieb eventuell auftretenden Verzerrung der Batteriezelle ist so deren zuverlässige Fixierung sichergestellt.

Zur Reduzierung der Herstellungskosten der Batteriezellenanordnung können die beiden Rahmenelemente baugleich sein.

Die Erfindung betrifft ferner eine Batterieanordnung mit einer Mehrzahl stapelartig angeordneter Batteriezellenanordnungen gemäß zumindest einer der vorstehend beschriebenen Ausführungsformen. Insbesondere ist jeder Batteriezelle ein erstes und ein zweites Rahmenelement zugeordnet, wobei die ersten Rahmenelemente baugleich und die zweiten Rahmenelemente baugleich sind. So sind lediglich zwei verschiedene Arten von Gleichteilen erforderlich, um die die Batteriezelle fixierenden Komponenten bereitzustellen. Eine besonders kostengünstige Herstellung und Montage ergibt sich, wenn (mit Ausnahme der am Anfang und Ende der stapelartig vorgesehenen Batteriezellen) jeder Batteriezelle grundsätzlich genau ein erstes und ein zweites Rahmenelement zugeordnet ist.

Weitere Ausführungsformen der Erfindung sind der Beschreibung, den Ansprüchen und den Zeichnungen zu entnehmen.

Nachfolgend wird die vorliegende Erfindung rein beispielhaft anhand vorteilhafter Ausführungsformen unter Bezugnahme auf die beigefügten Zeichnungen erläutert. Es zeigen:
- Fig. 1: eine als Folienzelle ausgebildete Batteriezelle,
- Fig. 2: eine Ausführungsform eines Rahmenelements,
- Fig. 3: eine Explosionsdarstellung einer Ausführungsform der erfindungsgemäßen Batteriezellenanordnung,
- Fig. 4: einen Querschnitt durch die Batteriezellenanordnung der Fig. 3,
- Fig. 5: eine Perspektivansicht der Batteriezellenanordnung der Fig. 3,
- Fig. 6: eine Ausführungsform der erfindungsgemäßen Batterieanordnung und
- Fig. 7: schematisch einen Querschnitt durch eine Ausführungsform der erfindungsgemäßen Batterieanordnung.

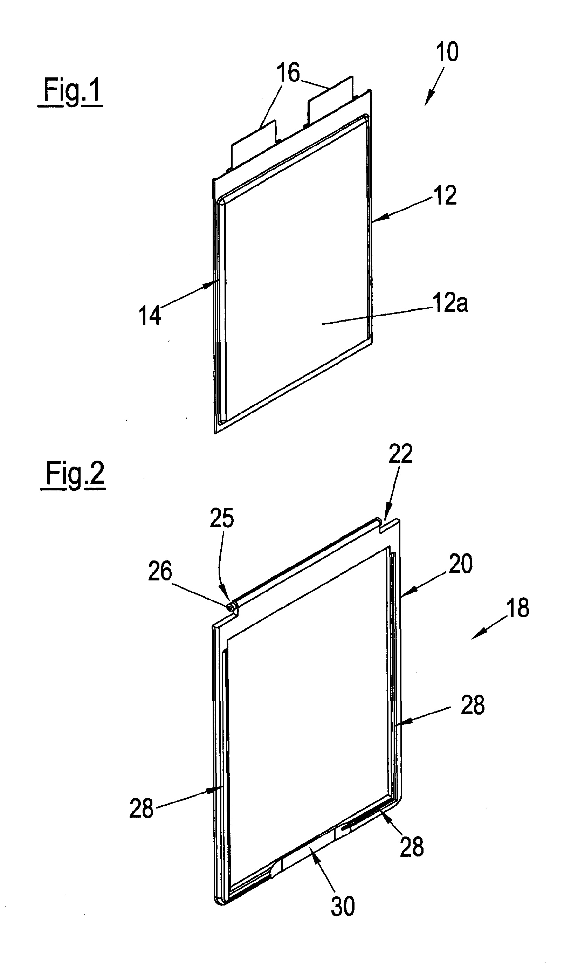

Fig. 1 zeigt eine Batteriezelle 10, die als Folienzelle ausgebildet ist. Derartige Folienzellen werden auch als Pouch-Zellen bezeichnet. Sie weisen anstelle eines festen Gehäuses eine als Folie ausgebildete Umhüllung und daher eine gewisse Flexibilität auf.

Die Batteriezelle 10 umfasst einen flachen, rechteckigen Zellenkörper 12 mit Stirnflächen 12a, 12b (Stirnfläche 12b in Fig. 1 nicht sichtbar), der die zur Speicherung elektrischer Energie notwendigen Funktionskomponenten umfasst. Randseitig ist der Zellenkörper 12 von einem falzartig ausgebildeten Zellenrand 14 umgeben. Die Batteriezelle 10 weist ferner an der Oberseite (bezogen auf die hier gezeigte vertikale Einbaulage) Kontaktabschnitte 16 auf, durch die die Batteriezelle 10 elektrisch aufgeladen und/oder entladen werden kann.

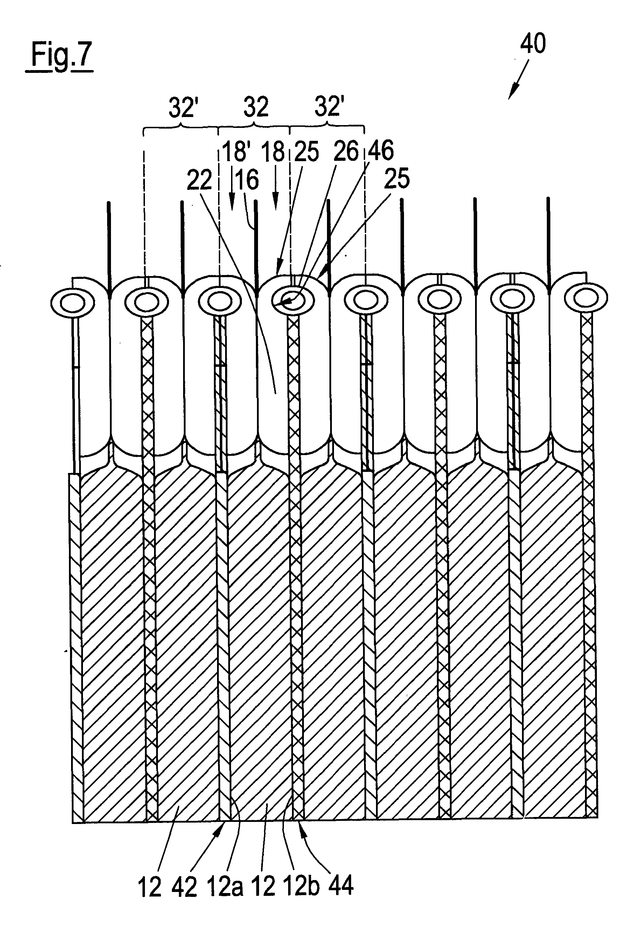

Da die Batteriezelle 10 eine vergleichsweise geringe innere Stabilität aufweist, muss sie mit einem tragenden Element versehen werden, das zweckmäßigerweise kompakt aufgebaut ist. Fig. 2 zeigt ein Rahmenelement 18, das zu diesem Zweck vorgesehen ist. Das Rahmenelement 18 umfasst einen Rahmenabschnitt 20, der den Zellenkörper 12 nach der Montage umgibt und gleichzeitig dessen Stirnflächen 12a, 12b frei lässt. An dem Rahmenabschnitt 20 ist ein Halteabschnitt 22 vorgesehen, der sich in der Rahmenabschnittsebene von dem Rahmenabschnitt 20 weg erstreckt. An seiner dem Rahmenabschnitt 20 abgewandten Seite weist der Halteabschnitt 22 einen Kühlkanal 25 auf, in dem ein Kühlrohr 26 angeordnet ist. Wie in Fig. 7 deutlicher zu erkennen ist, umgibt der Kühlkanal 25 das Kühlrohr 26 nur in etwa zur Hälfte.

Der Rahmenabschnitt 20 weist an der linken und der rechten Seite sowie teilweise an seiner unteren Seite eine Klemmvorrichtung 28 auf, die zur Verbesserung einer reibschlüssigen Fixierung des Zellenrands 14 dient. Die Funktion der Klemmvorrichtung 28 wird nachfolgend noch näher beschrieben. Ferner ist an der unteren Seite des Rahmenabschnitts 20 eine Ausnehmung 30 vorgesehen. In diesem Bereich ist die Dicke des Rahmenabschnitts 20 des Rahmenelements 18 im Vergleich zu den anderen Abschnitten des Rahmenabschnitts 20 verringert. Auch die Funktion der Ausnehmung 30 wird nachfolgend noch näher beschrieben.

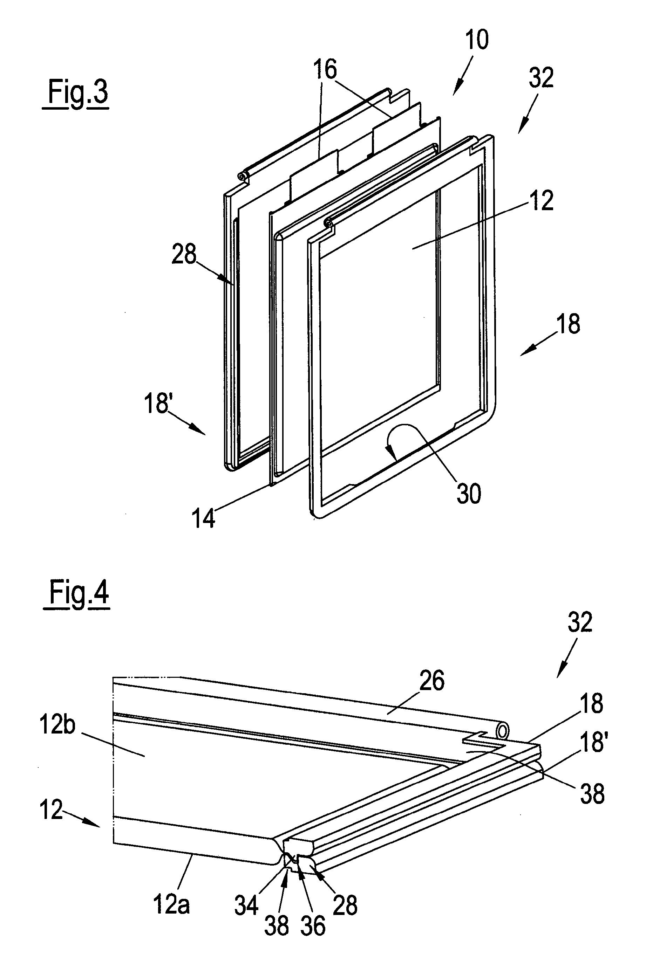

Fig. 3 zeigt eine Explosionsdarstellung der wesentlichen Komponenten einer Batteriezellenanordnung 32. Die Batteriezellenanordnung 32 umfasst zwei vorzugsweise baugleich ausgeführte Rahmenelemente 18, 18', zwischen die bei ihrer Montage die Batteriezelle 10 eingeklemmt wird.

Deren Zellenrand 14 wird dabei an der in Fig. 3 rechten und linken Seite der Batteriezelle 10 über praktisch die gesamte Höhe des Zellenkörpers 12 von der Klemmvorrichtung 28 erfasst. An der den Kontaktabschnitten 16 zugeordneten Oberseite des jeweiligen Rahmenelements 18, 18' ist keine Klemmvorrichtung vorgesehen, um die elektrische Kontaktierung der Kontaktabschnitte 16 mit dem Inneren des Zellenkörpers 12 nicht zu beschädigen. An der unteren Seite der Batteriezelle 10 wird der Zellenrand 14 mit Ausnahme des Bereichs der Ausnehmungen 30 ebenfalls von der Klemmvorrichtung 28 erfasst. Mit anderen Worten wird mehr als die Hälfte des Umfangs des Zellenrands 14 von der Klemmvorrichtung 28 erfasst, um eine zuverlässige Fixierung der Batteriezelle 10 zwischen den Rahmenelementen 18, 18' sicherzustellen.

Fig. 4 zeigt einen Querschnitt durch die Batteriezellenanordnung 32. Es ist zu erkennen, dass die Klemmvorrichtung 28 an dem oberen Rahmenelement 18 einen Vorsprung 34 umfasst, dem eine komplementär ausgeformte Nut 36 an dem unteren Rahmenelement 18' zugeordnet ist. Eine dem Zellenkörper 12 zugewandte Flanke der Vorsprungs 34 bzw. der Nut 36 verläuft schräg zu den Stirnflächen 12a, 12b, damit scharfe Kanten vermieden werden und der Zellenrand 14 geschont wird.

Um lediglich eine Ausführungsform des Rahmenelements 18, 18' zur Herstellung einer Batteriezellenanordnung 32 bereitstellen zu müssen, kann vorgesehen sein, dass die Klemmvorrichtung 28 an einer Seite (z.B. linke Seite) des Rahmenabschnitts 20 als Vorsprung 34 und an der gegenüberliegenden Seite (z.B. rechte Seite) als Nut 36 ausgebildet ist. Die Rahmenelemente 18, 18' sind dann Gleichteile.

Zusammen bilden der Vorsprung 34 und die Nut 36 eine Nut-Feder-Verbindung, in die der Zellenrand 14 eingeklemmt wird. Die dem Vorsprung 34 bzw. der Nut 36 gegenüberliegende Oberflächen der Rahmenelemente 18, 18' sind eben ausgeführt, um mehrere identisch aufgebaute Batteriezellenanordnungen 32 nebeneinander oder übereinander stapeln zu können.

Fig. 4 ist ferner zu entnehmen, dass die Rahmenelemente 18, 18' jeweils an der dem Vorsprung 34 und der Nut 36 gegenüberliegenden Stirnseite eine Ausnehmung 38 aufweisen, in die plattenartige Elemente zur Verbesserung der Kühlung oder zum Schutz der Stirnflächen 12a, 12b eingelegt werden können.

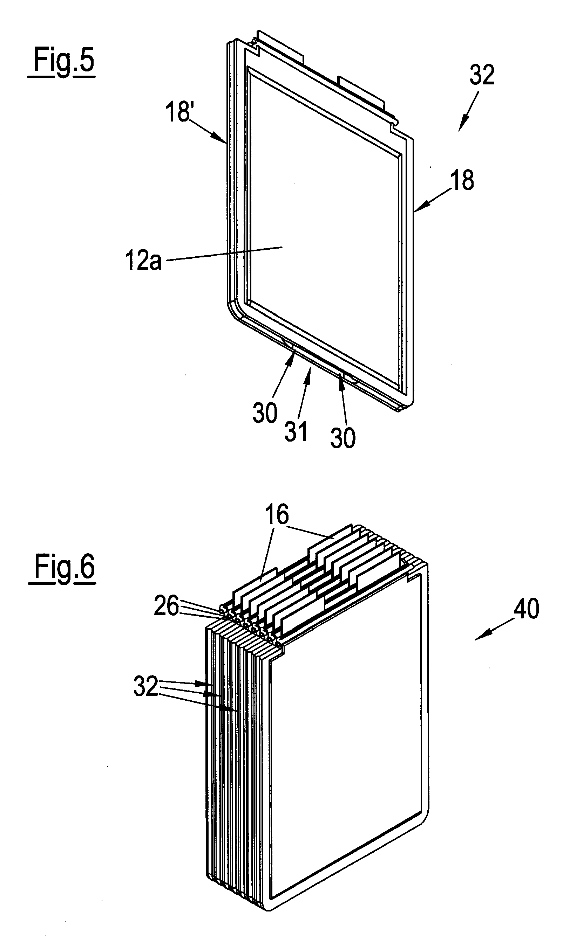

Fig. 5 zeigt eine Perspektivansicht einer montierten Batteriezellenanordnung 32. Durch die Wahl der Perspektive ist eine durch die beiden Ausnehmungen 30 der Rahmenelemente 18, 18' gebildete Entlüftungsöffnung 31 an der in Einbaulage unteren Seite der Batteriezellenanordnung 32 erkennbar. Diese ermöglicht es, dass Gase und/oder Flüssigkeiten aus der Batteriezellenanordnung 32 austreten können. Dies ist insbesondere dann von Bedeutung, wenn die Batteriezellenanordnung 32 Teil eines Stapels mehrerer entsprechender Batteriezellenanordnungen 32 ist, so dass durch die den Stirnflächen 12a, 12b des Zellenkörpers 12 zugeordneten Öffnungen der Rahmenelemente 18, 18' kein Fluid austreten kann, da diese durch benachbarte Batteriezellenanordnung 32 bedeckt ist.

Fig. 6 zeigt eine Batterieanordnung 40, die aus einer Mehrzahl von im Wesentlichen identisch aufgebauten Batteriezellenanordnungen 32 besteht. Die Darstellung zeigt, dass die Kühlrohre 26 der einzelnen Anordnungen 32 auf einfache Weise mit Sammelleitungen für ein Kühlmittel verbindbar sind, die beispielsweise senkrecht zu den Kühlrohren 26 verlaufen. Da die Kühlrohre 26 biegungsfrei ausgebildet sind, ist der von ihnen verursachte Strömungswiderstand gering, so dass ein effizienter Kühlmittelfluss erzeugt werden kann. Es ist ferner zu sehen, dass die Kühlrohre 26 insbesondere Bereiche um die Kontaktabschnitte 16 kühlen, die einen besonders hohen Kühlbedarf aufweisen. Die dargestellte Ausgestaltung der Batterieanordnung 40 bzw. der sie bildenden Batteriezellenanordnungen 32 stellt eine Möglichkeit dar, die Kühlung der Batteriezellen 10 einerseits möglichst effizient auszugestalten, andererseits konstruktiv aufwendige und daher kostspielige und fehleranfällige Konstruktionen zu vermeiden.

Fig. 7 zeigt einen Ausschnitt eines Querschnitts durch die Batterieanordnung 40 senkrecht zu den Stirnflächen 12a, 12b der Zellenkörper 12. Beispielhaft wird der Aufbau der Batterieanordnung 40 anhand der gekennzeichneten Batteriezellenanordnungen 32, 32' erläutert.

Der Zellenkörper 12 der Batteriezellenanordnung 32 steht an seiner linken Stirnfläche 12a mit einer Elastomerschicht 42 in Kontakt, die diese im Wesentlichen vollständig bedeckt. Die Elastomerschicht 42 ermöglicht aufgrund ihrer Elastizität einen flexiblen Dickenausgleich des Zellenkörpers 12. Mit anderen Worten nimmt sie Abstandsänderungen zwischen benachbarten Zellenkörpern 12 auf, um einerseits Spiel zwischen ihnen zu vermeiden und andererseits die eingangs erwähnte "Zellatmung" zu ermöglichen. Eine vollständige Unterbindung der "Zellatmung", wie sie beispielsweise bei Verwendung von starren Abstandhaltern auftritt, beeinträchtigt die Leistungsfähigkeit der Batteriezellen 10.

Die Stirnfläche 12b des Zellenkörpers 12 steht mit einer Kühlplatte 44 in Kontakt, die sich bis zu dem der Batteriezellenanordnung 32 zugeordneten Kühlrohr 26 erstreckt. Das Kühlrohr 26 ist in einer Rinne 46 des Kühlkanals 25 angeordnet. Der Kühlkanal 25 steht über den Halteabschnitt 22 mit dem Rahmenabschnitt 20 des Rahmenelements 18 (vgl. Fig. 2) in Verbindung.

Zwischen den jeweiligen Rahmenabschnitten 20 der Rahmenelemente 18, 18' der Batteriezellenanordnung 32 ist - wie bereits vorstehend mehrfach erläutert - der Zellenrand 14 eingeklemmt. Durch diesen erstrecken sich auch die Kontaktabschnitte 16. Die Kontaktabschnitte 16 verlaufen von dem Inneren des Zellenkörpers 12 bis in einen von dem Kühlrohr 26 gekühlten Bereich und darüber hinaus. Dadurch werden sie besonders effizient gekühlt. Eine im Bereich der Stirnfläche 12b auftretende Abwärme der Batteriezelle 10 wird über die ebenfalls von dem Kühlrohr 26 gekühlte Kühlplatte 44 der Batteriezellenanordnung 32 abgeführt.

Fig. 7 zeigt ferner, dass durch die im Wesentlichen identische Ausbildung benachbarter Batteriezellenanordnungen 32, 32' auf effiziente Weise eine dicht gepackte und doch gleichzeitig zuverlässig gekühlte Batterieanordnung 40 mit zuverlässig fixierten Batteriezellen 10 geschaffen wird. Jeder Batteriezellenanordnung 32, 32' ist jeweils eine Elastomerschicht 42 und eine Kühlplatte 44 sowie ein Kühlrohr 26 zugeordnet. Diese Komponenten werden durch die regelmäßige Anordnung jedoch auch von der jeweils benachbarten Batteriezellenanordnung 32' bzw. 32 genutzt, so dass ein sich zyklisch wiederholender Aufbau der Funktionskomponenten Elastomerschicht 42, Zellenkörper 12, Kühlplatte 24 vorgesehen ist.

Durch die Rinnen 46 der Kühlkanäle 25 der Rahmenelemente 18, 18' werden die Kühlrohre 26 zuverlässig geschützt. Für eine Vormontage muss je Batteriezellenanordnung 32, 32' lediglich ein Kühlrohr 26 in die Rinne 46 eines der Rahmenelemente 18, 18' eingesetzt werden. Die freie Rinne 46 der benachbarten Batteriezellenanordnung 32' bzw. 32 vervollständigt beim Zusammensetzen der Batterieanordnung 40 den Schutz des Kühlrohrs 26. Zwar kann grundsätzlich vorgesehen sein, das Kühlrohr 26 einstückig mit dem Rahmenelement 18, 18' auszuführen, aus fertigungstechnischen Gründen ist in vielen Fällen jedoch eine separate Fertigung des Kühlrohrs 26 vorteilhaft.

### Bezugszeichenliste

- 10: Batteriezelle
- 12: Zellenkörper
- 12a, 12b: Stirnfläche
- 14: Zellenrand
- 16: Kontaktabschnitt
- 18: Rahmenelement
- 20: Rahmenabschnitt
- 22: Halteabschnitt
- 25: Kühlkanal
- 26: Kühlrohr
- 28: Klemmvorrichtung
- 30: Ausnehmung
- 31: Entlüftungsöffnung
- 32, 32': Batteriezellenanordnung
- 34: Vorsprung
- 36: Nut
- 38: Ausnehmung
- 40: Batterieanordnung
- 42: Elastomerschicht
- 44: Kühlplatte
- 46: Rinne

## Patentansprüche

1. Batteriezellenanordnung mit
einer als Folienzelle ausgebildeten Batteriezelle (10), die einen flachen Zellenkörper (12) mit zwei Stirnseiten (12a, 12b), einen den Zellenkörper (12) umrandenden flexiblen Zellenrand (14) und zwei an einer Randseite der Batteriezelle (10) angeordnete Kontaktabschnitte (16) umfasst, und mit
einer ein erstes Rahmenelement (18) und ein zweites Rahmenelement (18') umfassenden Rahmenanordnung (32), die den Zellenkörper (12) randseitig allseitig einrahmt,
wobei an einer den Stirnseiten (12a, 12b) des Zellenkörpers (12) abgewandten Seite der Rahmenanordnung (32) zumindest eine Entlüftungsöffnung (31) vorgesehen ist, um in einem Schadensfall den Austritt von Fluid, insbesondere Gas aus der Batteriezellenanordnung zu ermöglichen,
dadurchgekennzeichnet,dass
die Entlüftungsöffnung (31) einer Seite der Batteriezelle (10) zugeordnet ist, die der die Kontaktabschnitte (16) aufweisenden Randseite der Batteriezelle (10) gegenüber liegt.

2. Batteriezellenanordnung nach Anspruch 1,
**dadurch gekennzeichnet, dass**
die Entlüftungsöffnung (31) in Einbaulage der Batteriezellenanordnung unten angeordnet ist.

3. Batteriezellenanordnung nach Anspruch 1 oder 2,
**dadurch gekennzeichnet, dass**
die Entlüftungsöffnung (31) durch eine Ausnehmung (30) an dem ersten Rahmenelement (18) und/oder eine Ausnehmung (30) an dem zweiten Rahmenelement (18') gebildet ist.

4. Batteriezellenanordnung nach zumindest einem der vorstehenden Ansprüche,
**dadurch gekennzeichnet, dass**
die beiden Rahmenelemente (18, 18') baugleich sind.

5. Batterieanordnung mit einer Mehrzahl stapelartig angeordneter Batteriezellenanordnungen gemäß zumindest einem der vorstehenden Ansprüche.

6. Batterieanordnung nach Anspruch 5,
dadurchgekennzeichnet,dass
jeder Batteriezelle (10) ein erstes und ein zweites Rahmenelement (18, 18') zugeordnet ist, wobei die ersten Rahmenelemente (18) baugleich und die zweiten Rahmenelemente (18') baugleich sind.

## Claims

1. Battery cell arrangement having a battery cell (10) which is in the form of a film cell and comprises a flat cell body (12) with two end faces (12a, 12b), a flexible cell rim (14) surrounding the cell body (12), and two contact sections (16) arranged on a rim side of the battery cell (10), and having a frame arrangement (32) which comprises a first frame element (18) and a second frame element (18') and frames the cell body (12) on all sides on the rim,
wherein at least one vent opening (31) is provided on a side of the frame arrangement (32) which faces away from the end faces (12a, 12b) of the cell body (12), in order to allow fluid, in particular gas, to emerge from the battery cell arrangement in the event of damage, **characterized in that** the vent opening (31) is associated with a face of the battery cell (10) which is opposite the rim face, which has the contact section (16), of the battery cell (10).

2. Battery cell arrangement according to Claim 1, **characterized in that**, the vent opening (31) is arranged at the bottom when the battery cell arrangement is in the installed position.

3. Battery cell arrangement according to Claim 1 or 2, **characterized in that** the vent opening (31) is formed by a recess (30) on the first frame element (18) and/or by a recess (30) on the second frame element (18').

4. Battery cell arrangement according to at least one of the preceding claims, **characterized in that** the two frame elements (18, 18') are physically identical.

5. Battery arrangement having a plurality of battery cell arrangements which are arranged in the form of a stack, according to at least one of the preceding claims.

6. Battery arrangement according to Claim 5, **characterized in that** each battery cell (10) is associated with a first and a second frame element (18, 18'), with the first frame elements (18) being physically identical and with the second frame elements (18') being physically identical.

## Revendications

1. Agencement d'élément de batterie, avec
un élément de batterie (10) formé par un élément en forme de feuille, qui comprend un corps d'élément plat (12) avec deux faces frontales (12a, 12b), un bord d'élément flexible (14) encadrant le corps d'élément (12) et deux parties de contact (16) disposées sur un côté du bord de l'élément de batterie (10), et avec
un agencement de cadre (32) comprenant un premier élément de cadre (18) et un deuxième élément de cadre (18'), qui encadre sur tous les côtés le corps d'élément (12),
dans lequel il est prévu sur un côté de l'agencement de cadre (32) détourné des faces frontales (12a, 12b) du corps d'élément (12), au moins une ouverture d'évent (31), afin de permettre en cas de dommage la sortie de fluide, en particulier de gaz hors de l'agencement d'élément de batterie,
**caractérisé en ce que** l'ouverture d'évent (31) est associée à un côté de l'élément de batterie (10), qui est situé à l'opposé du côté du bord de l'élément de batterie (10) présentant les parties de contact (16).

2. Agencement d'élément de batterie selon la revendication 1, **caractérisé en ce que** l'ouverture d'évent (31) est disposée vers le bas dans la position de montage de l'agencement d'élément de batterie.

3. Agencement d'élément de batterie selon la revendication 1 ou 2, **caractérisé en ce que** l'ouverture d'évent (31) est formée par un évidement (30) sur le premier élément de cadre (18) et/ou un évidement (30) sur le deuxième élément de cadre (18').

4. Agencement d'élément de batterie selon au moins une des revendications précédentes, **caractérisé en ce que** les deux éléments de cadre (18, 18') sont de construction identique.

5. Agencement de batterie avec une multiplicité d'agencements d'éléments de batterie selon au moins une des revendications précédentes, qui sont empilés.

6. Agencement de batterie selon la revendication 5, **caractérisé en ce qu'**un premier élément de cadre (18) et un deuxième élément de cadre (18') sont associés à chaque élément de batterie (10), dans lequel les premiers éléments de cadre (18) sont de construction identique et les deuxièmes éléments de cadre (18') sont de construction identique.
